# EUROPEAN PATENT APPLICATION

(11) **EP 2 574 894 A2**
(43) Date of publication of application: **03.04.2013**
(21) Application number: 12003598.5
(22) Date of filing: 07.05.2012
(51) Int. Cl.: G01L 5/24, G01B 3/18, G01B 3/24, G01B 3/38, G01B 21/02

(54) **System, apparatus and method for in situ fastener preload measurement**

(30) Priority: 19.05.2011 US 201113110980
(71) Applicant: Gamesa Innovation & Technology, S.L., 31621 Sarriguren (ES)
(72) Inventor: Redin Miqueleiz, Juan, 31621 Sarriguren (ES)

(57) **Abstract**

A system for in situ fastener preload measurement. The system includes a length measuring tool adapted to grip a fastener by the axially opposed ends of the fastener, and a computing device coupled to the length measuring tool and comprising a database and a display. The length measuring tool is provided with tips adapted to seat in indentations disposed in the axially opposed ends of the fastener, with the indentations having a shape complementary to the shape of the tips, and the indentations being disposed such that the deepest points of the indentations are directly axially opposite each other.

## Description

### BACKGROUND

Bolted joints are used to clamp two parts of a structure and maintain the two parts in clamped relation. Bolts are installed in such joints with an initial tension known as bolt preload, which is proportional to the torque applied to the bolt head. The bolt preload serves to maintain the joined parts in clamped relation and to increase the fatigue resistance of the joint. In structures exposed to high stresses or adverse environmental conditions, such as wind turbines, the preload of a bolt may decrease over time, weakening the joint and increasing the potential for joint fatigue and failure. However, accurately applying the correct initial preload to a bolt can reduce the likelihood of failure. It is thus desirable to achieve high accuracy in applying the initial preload as well as to monitor the preload of the joint over time.

Known torque wrenches allow for measured application of torque to the bolt, and bolt preload may be calculated from the applied torque value and the coefficients of friction between the bolt, the parts to be joined, and the nut on the bolt. As such coefficients may vary depending on the materials used and the presence or absence of lubrication, the preload calculated from the same torque value may vary by as much as 25%.

Bolt preload may also be calculated from the elongation of the bolt. Certain known solutions include ultrasonic sensors disposed on the head of the bolt. However, the use of such sensors requires that the head and the tip of the bolt be machined with high accuracy, so as to return an accurate reading. However, the use of such sensors may effectively double the cost of the bolt. Furthermore, such sensors may not be able to adequately withstand adverse environmental conditions. A low-cost, accurate method of measuring bolt preload in real-time during installation, as well as subsequent to installation, is thus desired.

### SUMMARY

According to at least one exemplary embodiment, a system for in situ fastener preload measurement is disclosed. The system may include a length measuring tool adapted to grip a fastener by the axially opposed ends of the fastener, and a computing device coupled to the length measuring tool and comprising a database and a display.

A method for in situ fastener preload measurement is also disclosed. The method may include measuring the length of a fastener with a length measuring tool communicatively coupled to a computing device comprising a display and a database and correlating the length of the fastener to a corresponding preload force value stored in the database.

A method of tensioning a fastener or a nut disposed on the fastener is also disclosed. The method may include tensioning the fastener or the nut disposed on the fastener using a torque applying tool communicatively coupled to a computing device comprising a display and a database and simultaneously measuring the length of the fastener with a length measuring tool communicatively coupled to the computing device, correlating the length of the fastener to a corresponding preload force value stored in the database, and stopping tensioning the fastener or the nut disposed on the fastener when a desired preload force is achieved.

In the above-described system and methods, the length measuring tool is provided with tips adapted to seat in indentations disposed in the axially opposed ends of the fastener, with the indentations having a shape complementary to the shape of the tips, and the indentations being disposed such that the deepest points of the indentations are directly axially opposite each other. The tips may have a conical, paraboloid, or hemispherical shape.

### BRIEF DESCRIPTION OF THE FIGURES

Advantages of embodiments of the present invention will be apparent from the following detailed description of the exemplary embodiments. The following detailed description should be considered in conjunction with the accompanying figures in which:
Fig. 1 is a diagram of an exemplary system for in situ fastener preload measurement.
Fig. 2a shows an exemplary fastener for use with the system for in situ fastener preload measurement.
Figs 2b-2d show exemplary length measuring tool tips and fastener indentations for use with the system for in situ fastener preload measurement.
Fig. 3 shows an exemplary display output of the system for in situ fastener preload measurement.

### DETAILED DESCRIPTION

Aspects of the invention are disclosed in the following description and related drawings directed to specific embodiments of the invention. Alternate embodiments may be devised without departing from the spirit or the scope of the invention. Additionally, well-known elements of exemplary embodiments of the invention will not be described in detail or will be omitted so as not to obscure the relevant details of the invention. Further, to facilitate an understanding of the description discussion of several terms used herein follows.

As used herein, the word "exemplary" means "serving as an example, instance or illustration." The embodiments described herein are not limiting, but rather are exemplary only. It should be understood that the described embodiment are not necessarily to be construed as preferred or advantageous over other embodiments. Moreover, the terms "embodiments of the invention", "embodiments" or "invention" do not require that all embodiments of the invention include the discussed feature, advantage or mode of operation.

Further, many of the embodiments described herein are described in terms of sequences of actions to be performed by, for example, elements of a computing device. It should be recognized by those skilled in the art that the various sequence of actions described herein can be performed by specific circuits (e.g., application specific integrated circuits (ASICs)) and/or by program instructions executed by at least one processor. Additionally, the sequence of actions described herein can be embodied entirely within any form of computer-readable storage medium such that execution of the sequence of actions enables the processor to perform the functionality described herein. Thus, the various aspects of the present invention may be embodied in a number of different forms, all of which have been contemplated to be within the scope of the claimed subject matter. In addition, for each of the embodiments described herein, the corresponding form of any such embodiments may be described herein as, for example, "a computer configured to" perform the described action.

According to at least one exemplary embodiment, a system for in situ fastener preload measurement 100 may be provided. System 100 may be used to measure fastener preload in "bolt-through" type joints, or any other joint where both ends of the fastener are accessible. The system may be used to measure fastener preload in situ, for example, so as to verify fastener preload after installing and tightening the fastener, and to measure any changes in preload over time. The system may be calibrated for a variety of fasteners and environmental factors, and may store the calibration data. The system may further be used in conjunction with a torque wrench or other bolt tensioning mechanisms, so as to provide bolt preload information in real time as the bolt is being tightened.

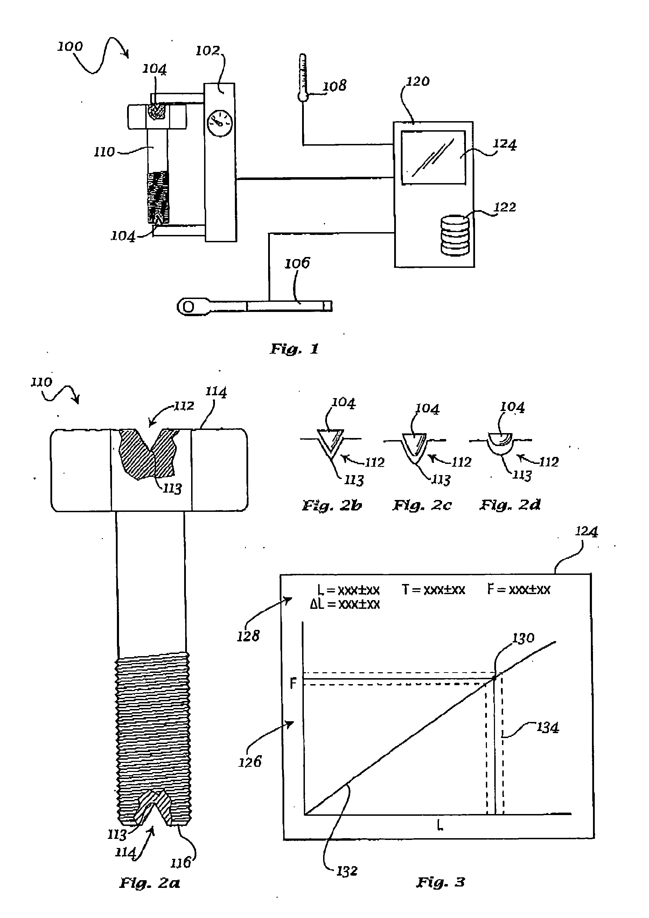

Referring to Fig. 1, system 100 may include a measuring gauge 102 communicatively coupled to a computing device 120. System 100 may further include a wrench 106 communicatively coupled to computing device 120 and a thermometer 108 communicatively coupled to computing device 120. Computing device 120 may be any computing device known in the art, and may include a database 122 and a display 124. Computing device 120 may further be a portable computing or communications device. Gauge 102 may be a micrometer, an extensometer, tensometer, or any mechanical elongation measurement tool known in the art that enables system 100 to function as described herein and that is adapted to grip a fastener by the axially opposite ends of the fastener. Wrench 106 may be a wrench, torque wrench, driver, or any other torque-applying tool known in the art that enables system 100 to function as described herein. Gauge 102 may be provided with tips 104, which may have a conical shape, as shown in Fig. 2b. In other embodiments, tips 104 may have a paraboloid shape, as shown in Fig. 2c, or a hemispherical shape, as shown in Fig 2d. Using tips 104 in conjunction with gauge 102 can facilitate increasing the accuracy of the measurements taken by gauge 102, as described further below.

Fig. 2a shows an exemplary fastener 110 for use with system 100. Fastener 110 may be any known type of fastener. For example, fastener 110 may be a bolt-type threaded fastener having a nominal diameter of 24 millimeters or greater (i.e., an M24 or greater bolt). To adapt fastener 110 for use with system 100, indentations 112 may be made in a first end 114 of fastener 110 and in a second end 116 of fastener 110. The shape of each indentation 112 can be complementary to the shape of a tip 104. Thus, embodiments may have indentations having a conical shape, as shown in Fig. 2b, a paraboloid shape, as shown in Fig. 2c, or a hemispherical shape, as shown in Fig. 2d. Indentations 112 and tips 104 can have a male-to-female fit such that, when a tip 104 is seated in an indentation 112, the position of tip 104 is fixed in three dimensions, thereby impeding the movement of tip 104. Alternative shapes for indentations 112 and tips 104 that allow for a fit that fixes the position of tip 104 in three dimensions may also be contemplated and provided.

Indentations 112 may be made by any machining process known in the art. As shown in Fig. 2a, the surfaces of first end 114 and second end 116 need not be finished or shaved and may remain uneven; the machining process may be limited solely to forming indentations 112. It should be appreciated that, for system 100 to function as described herein, the radial positions of indentations 112 on fastener 110 should be precise, such that the deepest point 113 of the indentation 112 disposed on first end 114 and deepest point 113 of the indentation 112 disposed on second end 116 are axially opposite each other, so as to allow for accurate measurement of any elongation of fastener 110. The depth of indentations 112 may vary, for example, between 2mm to 6mm; however, any depth that maintains tip 104 in a fixed position within indentation 112 may be used.

Prior to use of system 100 in situ, the system may be calibrated in laboratory or in other controlled conditions. To perform calibration of system 100, a particular fastener 110 having indentations 112 may be selected. The fastener may then be measured utilizing gauge 102 and tips 104 so as to obtain a length for the fastener when no preload forces are being exerted thereon. Measurements performed by gauge 102 may be transmitted to or input in computing device 120 and stored in database 122. Fastener 110 may then be subjected to preload forces in desired increments [Request for Comment: what is the desired precision and increment size?] and the length of the fastener can be measured subsequent to each increment in preload force. Each length measurement performed by gauge 102 and the value of the corresponding preload force may likewise be transmitted to or input in computing device 120 and stored in database 122. The resultant data set may then be used to generate a two-dimensional plot 126 correlating preload force and fastener length, as shown in Fig. 3. The plot may be displayed on display 124.

If desired, the calibration procedure described above may be repeated at diverse temperatures so as to account for thermal expansion or contraction of the fastener under varying environmental conditions. Thus, the calibration procedure may be performed at an initial temperature, and the temperature may then be increased or decreased in desired increments. The calibration procedure can then be repeated for each temperature value. Each length measurement performed by gauge 102, the value of the corresponding preload force, and the corresponding temperature value can be transmitted to or input in computing device 120 and stored in database 122. The resultant data set may then be used to generate a three-dimensional plot correlating temperature, preload force and fastener length. The plot may be displayed on display 124.

[Request for comment: The disclosure mentions accounting for the different elongations of the nut, shank and thread portions of the bolt. Please elaborate on how these factors are accounted for in this system and method.]

Database 122 can be populated with preload force, fastener length, temperature, and any other desired data for a variety of fasteners. For each group of fasteners having identical properties, a representative fastener of that group may be selected and the calibration procedure may be performed on the representative fastener. The resultant data set can then be identified as pertaining to the particular group of fasteners having the properties of the representative bolt. Thus, for in situ measurement of fastener length using gauge 102, database 122 may be populated with data for each group of fasteners that will be measured.

System 100 may be used to perform in situ preload force measurement on fasteners 110 having indentations 112 in first end 114 and second end 116 thereof, and disposed in "bolt-through" joints, or in any other location where both ends of the fastener are accessible. To perform the measurement procedure, gauge 102 can be placed proximate to a fastener 110 such that tips 104 of gauge 102 are seated in indentations 112 of fastener 110 and such that the positions of tips 104 are fixed in three dimensions. Gauge 102 may then be used to obtain a measurement of the length of fastener 110. A measurement of the ambient temperature may also be obtained, if desired. The measured length and temperature values may then be correlated with the data set in database 122 that corresponds to the group of fasteners to which the particular fastener 110 belongs. The preload force value corresponding to the measured length and temperature values can then be obtained.

The correlation of temperature, fastener length, and preload force may be performed automatically by computing device 120. The measured length values may be transmitted from gauge 102 to computing device 120. Likewise, measured temperature values may be transmitted from thermometer 108 to computing device 120. Alternatively, the measured values may be manually input into computing device 120. As shown in Fig. 3, after receiving the measured values, computing device 120 may display data 128 on display 123, including the measured length, the measured temperature, the calculated preload value, and any margins of error in the measurements and calculations. Computing device 120 may also display a two-dimensional plot 126 or three-dimensional plot on display 124, identifying the intersection point 130 of the length and preload force values 130 on the displayed curve 132 or surface, and may further mark any margins of error 134 on the plot.

System 100 may be utilized to obtain preload force values in real time while tensioning a threaded fastening member, such as a fastener or a nut disposed on the fastener. To that end, gauge 102 may be utilized to measure fastener length while torque wrench 106 may be used simultaneously to tension the fastener or the nut. Gauge 102 can thus continuously measure the increase in bolt length, which may then be correlated to the preload force exerted on the bolt by computing device 102, as described above. When the desired preload force is achieved, computing device 102 may indicate that no further tensioning is necessary and may transmit a signal to torque wrench 106 to cease tensioning the fastener or the nut. Calculating preload force simultaneously with tensioning the fastener or the nut can thus facilitate obtaining desired preload forces with higher accuracy.

The foregoing description and accompanying figures illustrate the principles, preferred embodiments and modes of operation of the invention. However, the invention should not be construed as being limited to the particular embodiments discussed above. Additional variations of the embodiments discussed above will be appreciated by those skilled in the art.

Therefore, the above-described embodiments should be regarded as illustrative rather than restrictive. Accordingly, it should be appreciated that variations to those embodiments can be made by those skilled in the art without departing from the scope of the invention as defined by the following claims.

## Claims

1. System for in situ fastener preload measurement, which comprises a length measuring tool adapted to grip a fastener by the axially opposed ends of the fastener; and a computing device coupled to the length measuring tool and comprising a database and a display, **characterized in that** the length measuring tool is provided with tips adapted to seat in indentations disposed in the axially opposed ends of the fastener, the indentations having a shape complementary to the shape of the tips, the indentations being disposed such that the deepest points of the indentations are directly axially opposite each other.

2. System according to claim 1, **characterized in that** it further comprises a torque applying tool communicatively coupled to the computing device.

3. System according to claim 1, **characterized in that** it further comprises a thermometer communicatively coupled to the computing device.

4. System according to claim 1, **characterized in that** the tips have a conical shape.

5. System according to claim 1, **characterized in that** the tips have a paraboloid shape.

6. System according to claim 1, **characterized in that** the tips have a hemispherical shape.

7. Method for in situ fastener preload measurement, which comprises the steps of measuring the length of a fastener with a length measuring tool communicatively coupled to a computing device comprising a display and a database; and correlating the length of the fastener to a corresponding preload force value stored in the database; **characterized in that** the length measuring tool is provided with tips adapted to seat in indentations disposed in the axially opposed ends of the fastener, the indentations having a shape complementary to the shape of the tips, the indentations being disposed such that the deepest points of the indentations are directly axially opposite each other.

8. Method according to claim 7, **characterized in that** it further comprises the steps of measuring the ambient temperature; and correlating the ambient temperature and the length of the fastener to a corresponding preload force value stored in the database.

9. Method according to claim 7, **characterized in that** it further comprises the step of displaying the length of the fastener and the corresponding preload force value on the display.

10. Method according to claim 7, **characterized in that** it further comprises the step of displaying a plot of the correlation between the length of the fastener and the preload force on the display.

11. Method according to claim 8, **characterized in that** it further comprises the step of displaying the length of the fastener, the ambient temperature, and the corresponding preload force value on the display.

12. Method according to claim 8, **characterized in that** it further comprises the step of displaying a plot of the correlation between the length of the fastener, the ambient temperature and the preload force on the display.

13. Method according to claim 7, **characterized in that** the tips have a conical shape.

14. Method according to claim 7, **characterized in that** the tips have a paraboloid shape.

15. Method according to claim 7, **characterized in that** the tips have a hemispherical shape.

16. Method of tensioning a fastener or a nut disposed on the fastener, which comprises the steps of; tensioning the fastener or the nut disposed on the fastener using a torque applying tool communicatively coupled to a computing device comprising a display and a database and simultaneously measuring the length of the fastener with a length measuring tool communicatively coupled to the computing device; correlating the length of the fastener to a corresponding preload force value stored in the database; and stopping tensioning the fastener or the nut disposed on the fastener when a desired preload force is achieved; **characterized in that** the length measuring tool is provided with tips adapted to seat in indentations disposed in the axially opposed ends of the fastener, the indentations having a shape complementary to the shape of the tips, the indentations being disposed such that the deepest points of the indentations are directly axially opposite each other.

17. Method according to claim 16, **characterized in that** it further comprises the steps of measuring the ambient temperature; and correlating the ambient temperature and the length of the fastener to a corresponding preload force value stored in the database.

18. Method according to claim 16, **characterized in that** the tips have a conical shape.

19. Method according to claim 16, **characterized in that** the tips have a paraboloid shape.

20. Method according to claim 16, **characterized in that** the tips have a hemispherical shape.
